Europäisches Patentamt

European Patent Office

Office européen des brevets

(11) Veröffentlichungsnummer : **0 282 476**
**B1**

(12) **EUROPÄISCHE PATENTSCHRIFT**

(45) Veröffentlichungstag der Patentschrift :
07.03.90

(51) Int. Cl.$^5$ : **C 02 F   1/48**

(21) Anmeldenummer : 86905132.6

(22) Anmeldetag : 15.09.86

(86) Internationale Anmeldenummer :
PCT/AT 86/00055

(87) Internationale Veröffentlichungsnummer :
WO/8704422 (30.07.87 Gazette 87/17)

(54) VERFAHREN ZUR BEHANDLUNG EINER WÄSSERIGEN FLÜSSIGKEIT UND VORRICHTUNG ZUR DURCHFÜHRUNG DES VERFAHRENS.

(30) Priorität : 21.01.86 PCT/AT86/00007

(43) Veröffentlichungstag der Anmeldung :
21.09.88 Patentblatt 88/38

(45) Bekanntmachung des Hinweises auf die Patenterteilung : 07.03.90 Patentblatt 90/10

(84) Benannte Vertragsstaaten :
AT BE CH DE FR GB IT LI LU NL SE

(56) Entgegenhaltungen :
BE--A-- 465 481
BE--A-- 485 768
GB--A-- 1 274 902
US--A-- 2 864 750
US--A-- 4 073 712
**Die Akte enthält technische Angaben, die nach dem Eingang der Anmeldung eingereicht wurden und die nicht in dieser Patentschrift enthalten sind.**

(73) Patentinhaber : **MAITRON GERÄTEBAU GES.M.B.H.
Etrichgasse 34
A-6020 Innsbruck (AT)**

(72) Erfinder : **EIBL, Gerhard
Bundesstrasse 3
A-6111 Volders (AT)**

(74) Vertreter : **Weinzinger, Arnulf, Dipl.-Ing. et al
Patentanwälte Dipl.-Ing. Helmut Sonn Dr. Heinrich
Pawloy Dipl.-Ing. Arnulf Weinzinger Riemergasse 14
A-1010 Wien (AT)**

EP 0 282 476 B1

## Beschreibung

Die Erfindung bezieht sich auf ein Verfahren zur Behandlung einer wässerigen Flüssigkeit, bei dem diese Flüssigkeit im Durchfluß zwischen zwei einander gegenüberstehenden, mit Isolierstoff von der Flüssigkeit getrennten Elektroden der Einwirkung eines durch Anschluß dieser Elektroden an ein Gleich-Hochspannungspotential gebildeten elektrischen Feldes unterworfen wird, insbesondere zur Beseitigung von Kesselstein und Korrosion bzw. zum Verhüten der Bildung von Kesselstein und/oder Korrosion in von der behandelten Flüssigkeit durchströmten Gefäßen bzw. Rohrsystemen. Weiter bezieht sich die Erfindung auf eine Vorrichtung zum Durchführen dieses Verfahrens, mit einem mit einer Zuflußöffnung und einer Abflußöffnung versehenen Behandlungsraum und mit zwei zu beiden Seiten des Behandlungsraumes einander gegenüberliegend angeordneten, vom Behandlungsraum elektrisch isolierten Elektroden, und weiter mit einer an die Elektroden angeschlossenen elektrischen Gleichspannungs-Hochspannungsquelle.

Bedingt durch Wasserinhaltsstoffe verschiedener Art, insbesondere durch in Wasser gelösten Kalk, kommt es in Gefäßen und Rohrleitungen, in denen Wasser physikalischen Einflüssen ausgesetzt ist, wie z. B. einer intensiven Erhitzung in Heißwasserkesseln und Dampfkesseln, zur Bildung von Kesselstein und Korrosionen. Es ist bekannt, daß man dem nachteiligen Ausfallen von Wasserinhaltsstoffen, aus denen Kesselstein entsteht, und der Ausbildung korrosiver Eigenschaften des Wassers entgegenwirken kann, indem man dieses, bevor es den Gefäßen bzw. Rohrleitungen, in denen es besonderen Bedingungen ausgesetzt ist, zugeführt wird, der Einwirkung eines elektrischen und/oder magnetischen Feldes unterwirft. Es kann damit in mehr oder minder großem Ausmaß die Tendenz zum Ausfallen von Wasserinhaltsstoffen und die Tendenz zur Entwicklung korrosiver Eigenschaften des Wassers herabgesetzt werden, und es ist auch möglich, das Ausmaß von Kesselsteinbildungen und Korrosionen, welche in Gefäßen oder Rohrleitungen durch Beschickung derselben mit unbehandeltem Wasser entstanden sind, durch Speisung dieser Gefäße bzw. Rohrleitungen mit wie vorerwähnt behandeltem Wasser wieder zu vermindern ; das Ausmaß der Wirksamkeit der Behandlung von Wasser bzw. wässerigen Flüssigkeiten mit magnetischen und/oder elektrischen Feldern hängt auch wesentlich von der Intensität, der nach einer solchen Vorbehandlung auf das Wasser bzw. die wässerigen Flüssigkeiten einwirkenden physikalischen Bedingungen ab ; so nimmt z. B. die mit den bisher bekannt gewordenen Techniken erzielbare Wirkung umso mehr ab, je höheren thermischen Belastungen das vorbehandelte Wasser unterworfen wird. Verschiedene bekannte Vorrichtungen haben nur eine bescheidene Wirkung, und es haben diese Vorrichtungen oft einen verhältnismäßig aufwendigen Aufbau, und sie bedürfen ständiger aufwendiger Wartung und sind schon aus diesem Grund für einen allgemeinen Einsatz kaum geeignet. Manche dieser Vorrichtungen erfordern die Vorschaltung besonderer Filter, woraus ein zusätzlicher Anschaffungs- und Wartungsaufwand entsteht.

Es ist aus der GB-A 1 274 902 eine Vorrichtung vorstehend gennanter Art bekannt, bei der die beiden, durch Isolierstoff von der Flüssigkeit getrennten Elektroden an die beiden zueinander entgegengesetzte Polarität aufweisenden Klemmen einer Gleichspannungsquelle angeschlossen sind. Hiezu ist in dieser GB-A auch die Möglichkeit erwähnt, nur eine der beiden Elektroden einer solchen Vorrichtung durch Isolierstoff von der Flüssigkeit zu trennen. Eine bevorzugte Ausführungsform der in der GB-A 1 274 902 beschriebenen Vorrichtung weist mehrere hintereinander angeordnete Behandlungseinheiten mit je zwei durch Isolierstoff von der Flüssigkeit getrennten Elektroden auf, wobei auf zwei mit Gleichspannung gespeiste Behandlungseinheiten eine mit Wechselspannung gespeiste Behandlungseinheit folgt.

Aus der US-A 4 073 712 ist eine Vorrichtung zur elektrostatischen Behandlung von Wasser bekannt, bei der die zu behandelnde Flüssigkeit durch den zwischen zwei koaxial angeordneten zylindrischen Elektroden gebildeten Ringspalt geleitet wird, wobei beide Elektroden durch Isolierstoff von der Flüssigkeit getrennt sind und an die beiden zueinander entgegengesetzte Polarität aufweisenden Klemmen einer Gleichspannungsquelle angeschlossen sind.

Weiter ist aus der BE-A 465 481 eine Vorrichtung bekannt, in der eine Flüssigkeit in Durchfluß der Einwirkung eines elektrischen Wechselfeldes ausgesetzt wird. Bei einer Ausführungsform dieser Vorrichtung durchfließt die Flüssigkeit ein Glasrohr, an dessen Außenseite, also von der Flüssigkeit· getrennt, eine Elektrode angeordnet ist, welche ebenso wie eine koaxial im Inneren des Rohres in der Flüssigkeit befindliche Elektrode an eine Wechselspannungsquelle angeschlossen ist.

Es ist ein Ziel der vorliegenden Erfindung, ein Verfahren und eine Vorrichtung eingangs erwähnter Art zu schaffen, mit denen eine bessere Wirkung erzielbar ist als mit den bekannte Techniken hier in Rede stehender Art und welche auf einfache Weise mit geringem Aufwand realisiert werden können.

Das erfindungsgemäße Verfahren eingangs erwähnter Art ist dadurch gekennzeichnet, daß die zu behandelnde Flüssigkeit der durch ein mit einem Pol an den beiden genannten, einander gegenüberstehenden und von der Flüssigkeit isolierten Elektroden und mit dem anderen Pol elektrisch leitend an der Flüssigkeit liegendes Gleich-Hochspannungspotential gebildeten elektrischen Feldwirkung unterworfen wird. Mit diesem Verfahren kann der vorstehend angeführten Zielsetzung gut entsprochen werden. Es kann angenommen werden, daß die vorteilhaften Eigenschaften des erfindungsgemäßen Verfahrens davon herrühren, daß das Wasser bzw. die wässerige Flüssigkeit im Bereich der an der Isolierung der Elektrode bzw. der Elektroden entlangströmenden Oberflächenschicht eine Veränderung erfährt, welche dem Ausfall von Inhaltsstoffen aus der Flüssigkeit und dem Entstehen korrosiver Eigenschaften der Flüssigkeit stark entgegenwirkt. In diesem Zusammenhang kann ausgeführt werden, daß wässerige Flüssigkeiten deshalb auf die beschriebene Feldwirkung ansprechen, weil Wassermoleküle selbst Dipole darstellen sowie die in Wasser enthaltenen (gelösten oder nicht gelösten) Inhaltsstoffe positiver oder negativer Art als Ionen vorliegen und dadurch der Polarität entsprechend ausgerichtet werden. Bei Kochendwasserbereitung mit Stabheizkörpern konnten so in praktischen Versuchen die Ablagerungen, welche bei Erhitzung stark kalkhaltigen Wassers entstehen, durch Vorbehandlung des Wassers bei einer bestimmten für die Kochendwasserbereitung benutzten Wassermenge auf weniger als 1/4 gegenüber dem Einsatz unbehandelten Wassers herabgesetzt werden, und es ergab sich beim Einsatz von mit dem erfindungsgemäßen Verfahren vorbehandeltem Wasser überdies der vorteilhafte Effekt, daß die Menge an Ablagerungen, welche bei der Kochendwasserbereitung auf dem stabförmigen Heizkörper auftrat, auch bei sehr langer Betriebszeit einen bestimmten Grenzwert nicht überstieg. Es konnte auch festgestellt werden, daß sich Ablagerungen bzw. Kesselstein, die sich beim Einsatz unbehandelten Wassers zur Kochendwasserbereitung zuvor gebildet hatten, beim nachfolgenden Einsatz von Wasser, welches mit dem erfindungsgemäßen Verfahren behandelt worden war, deutlich abgebaut wurden. Für die erzielbare Wirkung erscheint weniger der Absolutwert des verwendeten Gleich-Hochspannungspotentials, sondern vielmehr die an den Elektroden bzw. in der Isolierung derselben gegenüber der hier gleichfalls eine Elektrodenschicht bildenden Flüssigkeit vorliegenden elektrischen Feldstärken und in Verbindung damit die in der Flüssigkeit auftretenden Ladungsdichten sowie auch die Elektrodenfläche von Einfluß. Es ist auch der gegenseitige Abstand der einander gegenüberstehenden Elektroden von Bedeutung.

Es ist weiter für das angestrebte Erzielen einer weitestgehenden Hintanhaltung des Ausfallens von Flüssigkeitsinhaltsstoffen von Vorteil, wenn die Flüssigkeit im Elektrodenbereich auf einem in bezug auf die Elektrode(n) negativen Potential gehalten wird. Man kann aber auch die Flüssigkeit im Elektrodenbereich auf einem in bezug auf die Elektrode(n) positiven Potential halten und damit einem Einwandern von Flüssigkeitspartikeln bzw. von Flüssigkeitsinhaltsstoffen in die die Elektrode überdeckende Isolierung entgegenwirken.

Die Wirkung der beim erfindungsgemäßen Verfahren vorgenommenen Behandlung der Flüssigkeit kann weiter wesentlich verbessert werden, wenn die Flüssigkeit im Elektrodenbereich einer Fließrichtungsänderung um annähernd 180° unterworfen wird.

Die erfindungsgemäße Vorrichtung eingangs erwähnter Art ist dadurch gekennzeichnet, daß die beiden einander gegenüberliegenden Elektroden elektrisch miteinander verbunden sind und der eine Anschluß der elektrischen Gleichspannungs-Hochspannungsquelle mit den beiden Elektroden und der andere Anschluß der elektrischen Gleichspannungs-Hochspannungsquelle mit einer, eine elektrisch leitende Verbindung zur Flüssigkeit herstellenden Anschlußelektrode verbunden ist. Diese Vorrichtung läßt bei sehr einfachem Aufbau mit verhältnismäßig geringer Hochspannung eine sehr gute Behandlungswirkung erzielen. Es ist dabei weiter günstig, wenn der positive Anschluß der Hochspannungsquelle mit den von der Flüssigkeit elektrisch isolierten Elektroden verbunden ist und der negative Anschluß der Hochspannungsquelle mit der die elektrisch leitende Verbindung zur Flüssigkeit herstellenden Anschlußelektrode verbunden ist.

Es ergibt sich auf einfache Weise eine für die Behandlung der Flüssigkeit günstige Form der den Elektroden entlang strömenden Flüssigkeitsoberfläche, wenn man vorsieht, daß je eine der beiden elektrisch leitend miteinander verbundenen Elektroden an einer Flachseite eines in Form einer flachen Dose ausgebildeten Behandlungsraumes angeordnet ist. Die mit der Vorrichtung erzielbare Behandlungswirkung kann dabei auf einfache Weise weiter verbessert werden, wenn man vorsieht, daß im Behandlungsraum durch einen Steg ein U-förmiger Durchflußweg gebildet ist und die Öffnungen für den Zufluß und Abfluß der Flüssigkeit einander benachbart je auf einer Seite des Steges angeordnet sind. Hinsichtlich der konstruktiven Ausbildung des Behandlungsraumes der Vorrichtung und der Anordnung der für die Behandlung der den Behandlungsraum durchfließenden Flüssigkeit dienenden isolierten Elektroden, welche elektrisch gesehen Kondensatorplatten bilden, ist es besonders vorteilhaft, wenn die Dose aus zwei aus Kunststoff bestehenden Dosenhälften gebildet ist, in deren flache Wandseiten die isolierten Elektroden eingebettet sind und die zwischen zwei aus Metall bestehenden Spannplatten angeordnet und durch diese zusammengepreßt sind. Die einzelnen Bauteile dieser Ausführungsform der erfindungsgemäßen Vorrichtung können auf einfache Weise hergestellt werden, und es ist ein guter Schutz der isolierten Elektroden sowohl in elektrischer als auch in mechanischer Hinsicht gewährleistet; auch sind die Elektroden gegen chemische Einwirkungen gut geschützt. Ferner kann, sollte sich dies einmal als notwendig oder wünschenswert erweisen, eine Wartung und Reinigung der Vorrichtung durch den Aufbau der Dose aus zwei aus Kunststoff bestehenden Dosenhälften, welcher eine einfache Demontage der Vorrichtung gestattet, auf einfache Weise durchgeführt werden. An sich ist aber hervorzuheben, daß die erfindungsgemäße Vorrichtung praktisch wartungsfrei ist. Durch die beiden Spannplatten wird ein mechanisch sehr stabiler Aufbau erhalten, der auch eine hohe Druckfestigkeit der Dose erzielen läßt, und es kann weiter durch diese Spannplatten nicht nur ein guter mechanischer Schutz der den Behandlungsraum bildenden Dose, sondern auch eine wirksame elektrische Abschirmung, die auch aus Sicherheitsgründen vorteilhaft ist, erhalten werden.

Die Behandlung wässeriger Flüssigkeiten mit dem erfindungsgemäßen Verfahren und mit der erfindungsgemäßen Vorrichtung ist nicht nur zur Vermeidung des Ausfallens von Wasserinhaltsstoffen und zum Hintanhalten von Korrosionserscheinungen im Behälter bzw. in den Rohrleitungen, durch die die Flüssigkeit strömt, sowie für den nachträglichen Abbau von Kesselstein und bereits eingetretenen Korrosionsschäden von Bedeutung ; die sich bei der erfindungsgemäßen Behandlung der Flüssigkeit einstellende Veränderung der Eigenschaften derselben kann auch auf verschiedenen anderen Gebieten genützt werden. Beispielsweise bietet die erfindungsgemäße Behandlung die Möglichkeit, bei der Konditionierung von Schwimmbadwasser mit geringeren Chemikalienzugaben als bisher das Auslangen zu finden ; so kann zum Erzielen eines bestimmten Desinfektionseffektes mit einer geringeren Chlorzugabe als bei unbehandeltem Wasser das Auslangen gefunden werden, und man kann auch für eine pH-Wert-Korrektur des Schwimmbadwassers mit geringeren Zugaben an $pH^-$- oder $pH^+$-Substanz das Auslangen finden.

Es sei ausdrücklich erwähnt, daß beim erfindungsgemäßen Verfahren praktisch keinerlei Stromfluß zwischen der elektrisch leitend an ein Hochspannungspotential in bezug auf die isolierten Elektroden angeschlossenen Flüssigkeit und den elektrisch isolierten Elektroden auftritt ; es kann allenfalls ein vernachlässigbarer Leckstrom allergeringsten Ausmaßes durch den endlichen Isolationswiderstand des die Elektrode bedeckenden Isoliermaterials fließen.

Die Behandlungswirkung wird beim erfindungsgemäßen Verfahren wesentlich von der Feldstärke und von der Ladungsdichte an der der isolierten Elektrode zugewandten Oberflächenschicht der zu behandelnden Flüssigkeit beeinflußt.

Die Erfindung wird nun unter Bezugnahme auf Beispiele, welche in der Zeichnung dargestellt sind, weiter erläutert. In der Zeichnung zeigt :

Fig. 1 eine erste Ausführungsform einer erfindungsgemäßen Vorrichtung in einer Ansicht,

Fig. 2 diese Ausführungsform im Schnitt gemäß der Linie II-II in Fig. 1, und

Fig. 3 diese Ausführungsform im Schnitt gemäß der Linie III-III in Fig. 1 ;

Fig. 4 zeigt die Schaltung einer bei einer erfindungsgemäßen Vorrichtung vorgesehenen Hochspannungsquelle, und

die Fig. 5 und 6 zeigen eine weitere Ausführungsform in zwei Schnittdarstellungen, wobei Fig. 5 ein Schnitt gemäß der Linie V-V in Fig. 6, und Fig. 6 ein Schnitt gemäß der Linie VI-VI in Fig. 5 ist.

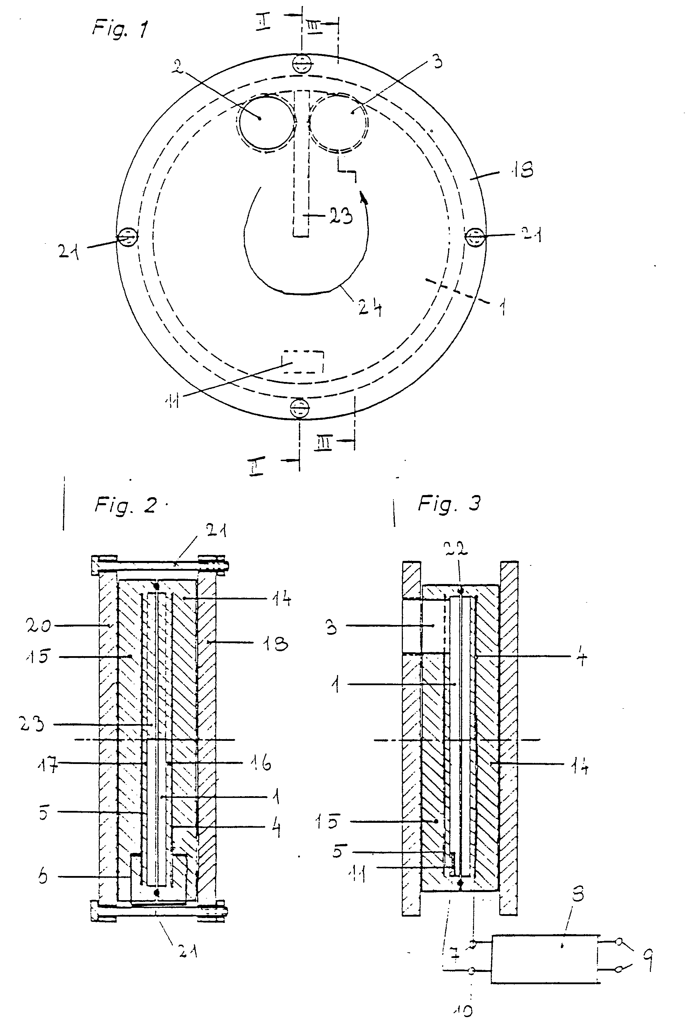

Die in den Fig. 1 bis 3 dargestellte Ausführungsform einer erfindungsgemäß ausgebildeten Vorrichtung weist einen Behandlungsraum 1 auf, der von der zu behandelnden Flüssigkeit durchflossen wird. Für den Zu- und Abfluß der zu behandelnden Flüssigkeit sind Zu- und Abflußöffnungen 2, 3 vorgesehen. Die Durchflußrichtung ist beliebig. Beiderseits des Behandlungsraumes 1 sind zwei Elektroden 4, 5 angeordnet, welche vom Behandlungsraum 1 elektrisch isoliert sind. Die Elektroden 4, 5 sind über eine Leitung 6 elektrisch leitend miteinander verbunden. Der eine Anschluß 7 einer elektrischen Hochspannungsquelle 8 ist mit den Elektroden 4, 5 verbunden. Die Hochspannungsquelle 8 wird über ihre Klemmen 9 mit elektrischer Energie, z. B. aus einem elektrischen Stromversorgungsnetz, versorgt. Der andere Hochspannungsanschluß 10 der Hochspannungsquelle 8 ist mit einer Anschlußelektrode 11 verbunden, welche eine elektrisch leitende Verbindung zu der im Behandlungsraum 1 befindlichen wässerigen Flüssigkeit herstellt. Die Anschlußelektrode 11 kann, wie im in den Fig. 1 bis 3 dargestellten Fall, eine eigene im Behandlungsraum 1 angeordnete Elektrode sein ; diese Anschlußelektrode kann aber auch durch andere metallisch leitende Teile, die mit der den Behandlungsraum 1 durchfließenden Flüssigkeit in Verbindung stehen, gebildet werden, wie z. B. durch Metallrohre, welche zur Zufluß- oder Abflußöffnung der Vorrichtung führen.

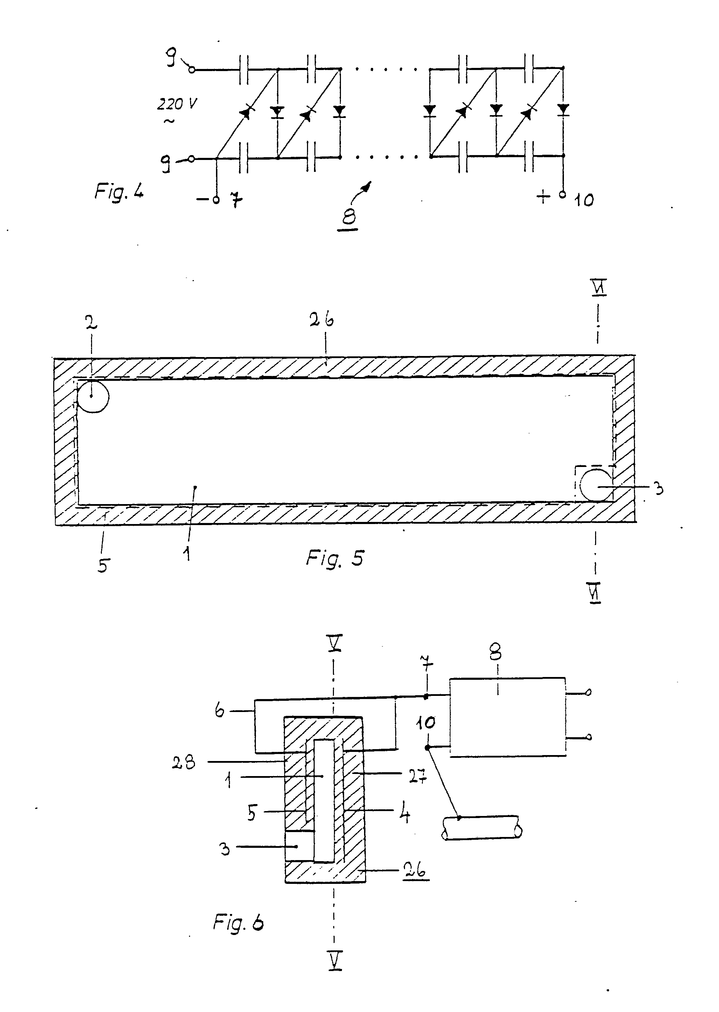

Die Hochspannungsquelle 8 kann in Form einer Kondensator-Gleichrichter-Kaskadenschaltung, wie sie in Fig. 4 dargestellt ist, ausgebildet sein. Es kommen aber auch andere Ausbildungen von Hochspannungsquellen in Frage, z. B. sogenannte Schaltnetzteile mit Hochspannungsausgang, und man kann gewünschtenfalls die Hochspannungsquelle zur galvanischen Trennung von der Stromversorgung mit einem Trenntransformator versehen.

Der Behandlungsraum 1 hat die Form einer flachen Dose, welche aus zwei aus Kunststoff bestehenden Dosenhälften 14, 15 gebildet ist. Die Elektroden 4, 5 sind in die flachen Wandseiten 16, 17 der Dosenhälften 14, 15 eingebettet. Die Dosenhälften 14, 15 sind zwischen zwei aus Metall bestehenden Spannplatten 18, 20 angeordnet, die ihrerseits mittels Spannschrauben 21 zusammengehalten sind. Durch die Spannplatten 18, 20 werden die Dosenhälften 14, 15 zusammengepreßt, wobei zwischen die einander zugewandten Ränder der Dosenhälften 14, 15 ein Dichtungsring 22 eingefügt ist.

Im Behandlungsraum 1 ist ein durch an die Dosenhälften 14, 15 angeformte Rippen gebildeter Steg 23 vorgesehen, durch den im Behandlungsraum 1 ein U-förmiger Durchflußweg gebildet wird, der in Fig. 1 durch einen Pfeil 24 angedeutet ist und von der Zufluß- und Abflußöffnung führt. Diese Öffnungen 2, 3 sind einander benachbart je auf einer Seite des Steges 23 angeordnet.

Bei praktisch ausgeführten Vorrichtungen, welche zur Behandlung von Wasser zwecks Verhüten der Bildung von Kesselstein bzw. zur Beseitigung von Kesselstein vorgesehen waren, wurde eine zwischen 3, 5 und 6 kV liegende Hochspannung, vorzugsweise eine Hochspannung von 5 kV, angewendet. Die die Elektroden 4, 5 von dem im Behandlungsraum 1 befindlichen Wasser trennenden Wände 16, 17 hatten dabei eine Stärke von 3 mm.

Bei der in den Fig. 5 und 6 dargestellte Ausführungsform einer erfindungsgemäßen Vorrichtung hat der Behandlungsraum 1 eine langgestreckte Form, und er ist als Hohlraum eines Kunststoffgefäßes 26 ausgebildet, in dessen Wände 27, 28 die Elektroden 4, 5 eingebettet sind. Analog wie bei der Ausführungsform nach den Fig. 1 bis 3 sind die Elektroden 4, 5 mit einer Leitung 6 elektrisch miteinander verbunden und liegen an einen Hochspannungsanschluß 7 einer Hochspannungsquelle 8 ; der andere Hochspannungsanschluß 10 der Hochspannungsquelle 8 ist an ein metallisches Zuleitungsrohr gelegt, das von der zum Behandlungsraum 1 fließenden Flüssigkeit durchströmt wird. Es kann auch in diesem Fall die Hochspannungsquelle 8 in verschiedener Form ausgebildet sein, wie dies vorstehend erörtert worden ist.

**Patentansprüche**

1. Verfahren zur Behandlung einer wässerigen Flüssigkeit, bei dem diese Flüssigkeit im Durchfluß zwischen zwei einander gegenüberstehenden, mit Isolierstoff von der Flüssigkeit getrennten Elektroden der Einwirkung eines durch Anschluß dieser Elektroden an ein Gleich-Hochspannungspotential gebildeten elektrischen Feldes unterworfen wird, insbesondere zur Beseitigung von Kesselstein und Korrosion bzw. zum Verhüten der Bildung von Kesselstein und/oder Korrosion in von der behandelten: Flüssigkeit durchströmten Gefäßen bzw. Rohrsystemen, dadurch gekennzeichnet, daß die zu behandelnde Flüssigkeit der durch ein mit einem Pol an den beiden genannten, einander gegenüberstehenden und von der Flüssigkeit isolierten Elektroden (4, 5) und mit dem anderen Pol elektrisch leitend an der Flüssigkeit liegendes Gleich-Hochspannungspotential gebildeten elektrischen Feldwirkung unterworfen wird.

2. Verfahren nach Anspruch 1, dadurch gekennzeichnet, daß die Flüssigkeit im Elektrodenbereich aud einem in bezug auf die Elektroden (4, 5) negativen Potential gehalten wird.

3. Verfahren nach Anspruch 1 oder 2, dadurch gekennzeichnet, daß die Flüssigkeit der zwischen zwei im wesentlichen ebenen, miteinander leitend verbundenen Elektroden (4, 5) und der dazwischen strömenden Flüssigkeit selbst gebildeten Feldwirkung unterworfen wird.

4. Verfahren nach Anspruch 3, dadurch gekennzeichnet, daß die Flüssigkeit im Elektrodenbereich einer Fließrichtungsänderung um annähernd 180° unterworfen wird.

5. Vorrichtung zur Durchführung des Verfahrens nach einem der Ansprüche 1 bis 4, mit einem mit einer Zuflußöffnung (2) und einer Abflußöffnung (3) versehenen Behandlungsraum (1) und mit zwei zu beiden Seiten des Behandlungsraumes einander gegenüberliegend angeordneten, vom Behandlungsraum elektrisch isolierten Elektroden (4, 5), und weiter mit einer an die Elektroden (4, 5) angeschlossenen elektrischen Gleichspannungs-Hochspannungsquelle (8), dadurch gekennzeichnet, daß die beiden einander gegenüberliegenden Elektroden (4, 5) elektrisch miteinander verbunden sind und der eine Anschluß (7) der elektrischen Gleichspannungs-Hochspannungsquelle (8) mit den beiden Elektroden (4, 5) und der andere Anschluß (10) der elektrischen Gleichspannungs-Hochspannungsquelle (8) mit einer, eine elektrisch leitende Verbindung zur Flüssigkeit -herstellenden Anschlußelektrode (11) verbunden ist.

6. Vorrichtung nach Anspruch 5, dadurch gekennzeichnet, daß der positive Anschluß der Hochspannungsquelle (8) mit den von der Flüssigkeit elektrisch isolierten Elektroden verbunden ist und der negative Anschluß der Hochspannungsquelle mit der die elektrisch leitende Verbindung zur Flüssigkeit herstellenden Anschlußelektrode verbunden ist.

7. Vorrichtung nach Anspruch 5 oder 6, dadurch gekennzeichnet, daß je eine der beiden elektrisch leitend miteinander verbundenen Elektroden (4, 5) an einer Flachseite eines in Form einer flachen Dose ausgebildeten Behandlungsraumes (1) angeordnet ist.

8. Vorrichtung nach Anspruch 7, dadurch gekennzeichnet, daß im Behandlungsraum (1) durch einen Steg (23) ein U-förmiger Durchflußweg gebildet ist und die Öffnungen (2, 3) für den Zufluß und Abfluß der Flüssigkeit einander benachbart je auf einer Seite des Steges angeordnet sind.

9. Vorrichtung nach Anspruch 7 oder 8, dadurch gekennzeichnet, daß die Dose aus zwei aus Kunststoff bestehenden Dosenhälften (14, 15) gebildet ist, in deren flache Wandseiten die isolierten Elektroden (4, 5) eigebettet sind und die zwischen zwei aus Metall bestehenden Spannplatten (18, 20) angeordnet und durch diese zusammengepreßt sind.

10. Vorrichtung nach einem der Ansprüche 5 bis 9, dadurch gekennzeichnet, daß die Anschlußelektrode, welche die elektrisch leitende Verbindung zur Flüssigkeit herstellt, ein Metallrohr ist, welches zur Zufluß- oder Abflußöffnung der Vorrichtung führt.

**Claims**

1. Process for the treatment of an aqueous liquid in which this liquid is subjected during circulation between two facing electrodes, separated from the liquid by insulation material, to the effect of an electrical field formed by connecting these electrodes to a d. c. high-voltage potential, particularly for the removal of boiler scale and corrosion, or for the prevention of the formation of boiler scale and/or corrosion in the containers or pipe systems through which the treated liquid flows, characterized in that the liquid to be treated is subjected to an electrical field effect formed by a d. c. high-voltage potential with one pole on the two said facing electrodes (4, 5), which are insulated from the liquid, and with the other pole electrically conducting on the liquid.

2. Process according to claim 1, characterized in that the liquid is held, in the electrode vicinity, at a negative potential relative to the electrode(s) (4, 5).

3. Process according to claim 1 or 2, characterized in that the liquid is subjected to the field effect formed between two essentially flat, conductively connected electrodes (4, 5) and the flowing liquid, between the same.

4. Process according to one of the claims 1 to 4, characterized in that the liquid is subjected in the vicinity of the electrodes to an approximately 180˚ change in flow direction.

5. Device for performing the process according to one of the claims 1 to 4, with a treatment chamber (1) provided with an inflow opening (2) and an outflow opening (3) and with two electrodes (4, 5) electrically insulated from the treatment chamber and arranged on either side of the treatment chamber, opposite each other, and also with an electric d. c. high-voltage source (8) connected to the electrodes (4, 5), characterized in that the two facing electrodes (4, 5) are electrically connected to each other and one connection (7) of the electric d. c. high-voltage source (8) is connected to the two electrodes (4, 5) and the other connection (10) of the d. c. high-voltage source (8) to a connection electrode (11) establishing an electrically conducting connection to the liquid.

6. Device according to claim 5, characterized in that the positive connection of the high-voltage source (8) is connected to the electrically insulated electrode(s) and the negative connection of the high-voltage source with the contact electrode establishing the electrically conducting contact to the liquid.

7. Device according to one of the claims 5 or 6, characterized in that one of the two electrodes (4, 5) which are in each case electrically conductively connected to each other, is arranged on one flat side of a treatment chamber (1), shaped in the form of a flat can.

8. Device according to claim 7, characterized in that a U-shaped flow path is formed in the treatment chamber (1) by means of a bridge (23) and the openings (2, 3) for the inflow and outflow of the liquid are arranged adjoining each other on either side of the bridge.

9. Device according to claim 9 or 10, characterized in that the can is made from two can halves (14, 15) in whose flat wall sides are embedded the insulated electrodes (4, 5) and which is arranged between two metal clamping plates (18, 20) and compressed by the same.

10. Device according to one of the claims 5 to 9, characterized in that the connecting electrode, which provides the electrically conducting connection to the liquid, is a metal tube which leads to the inflow or outflow opening of the device.

## Revendications

1. Procédé de traitement d'un liquide aqueux, selon lequel ce liquide est soumis, au cours de son écoulement entre deux électrodes en regard l'une de l'autre et séparées du liquide par un matériau isolant, à l'action d'un champ électrique résultant du raccordement de ces électrodes à un potentiel de courant continu haute tension, notamment pour l'élimination du tartre et de la corrosion, ou pour empêcher la formation de tartre et/ou de corrosion, dans les réservoirs et systèmes de canalisations dans lesquels circule le liquide traité, procédé caractérisé en ce que le liquide à traiter est soumis à l'effet du champ électrique créé par le potentiel de courant continu haute tension appliqué avec l'un de ses pôles aux deux électrodes (4, 5) précédemment citées, en regard l'une de l'autre et isolées du liquide, et appliqué au liquide, avec l'autre pôle, par électroconduction.

2. Procédé selon la revendication 1, caractérisé en ce que le liquide est maintenu, dans la zone des électrodes, à un potentiel négatif par rapport aux électrodes (4, 5).

3. Procédé selon la revendication 1 ou 2, caractérisé en ce que le liquide est soumis à l'action du champ créé entre deux électrodes (4, 5) sensiblement planes et reliées par une liaison conductrice, et créé par le liquide lui-même circulant entre ces électrodes.

4. Procédé selon la revendication 3, caractérisé en ce que le liquide est soumis, dans la zone des électrodes, à une variation du sens d'écoulement d'environ 180˚.

5. Dispositif pour la mise en œuvre du procédé selon l'une des revendications 1 à 4, avec une enceinte de traitement (1) pourvue d'une ouverture d'alimentation (2) et d'une ouverture d'évacuation (3), et avec deux électrodes (4, 5) en regard l'une de l'autre, agencées de chaque côté de l'enceinte de traitement et isolées électriquement de celle-ci, ainsi qu'avec une source de courant électrique continu, haute tension (8), raccordée aux électrodes (4, 5), dispositif caractérisé en ce que les deux électrodes en regard l'une de l'autre sont reliées électriquement entre-elles, et en ce que l'une des bornes (7) de la source de courant électrique continu, haute tension (8), est reliée aux deux électrodes (4, 5), l'autre borne (10) de la source de courant électrique continu, haute tension (8), étant reliée à une électrode de raccordement (11) qui établit une liaison électroconductrice avec le liquide.

6. Dispositif selon la revendication 5, caractérisé en ce que la borne positive de la source de courant haute tension (8) est reliée aux électrodes isolées électriquement du liquide, et en ce que la borne négative de la source de courant haute-tension, est reliée à l'électrode de raccordement établissant la liaison électro-conductrice avec le liquide.

7. Dispositif selon la revendication 5 ou 6, caractérisé en ce que chacune des deux électrodes (4, 5) reliées électriquement entre-elles, est disposée sur un côté plat d'une enceinte de traitement (1) réalisée sous la forme d'une boîte plate.

8. Dispositif selon la revendication 7, caractérisé en ce que l'on crée un chemin d'écoulement en forme de « U » dans l'enceinte de traitement (1), au moyen d'une nervure (23), et en ce que les ouvertures (2, 3) pour l'alimentation et l'évacuation du liquide sont voisines l'une de l'autre, en étant disposées chacune d'un côté de la nervure.

9. Dispositif selon la revendication 7 ou 8, caractérisé en ce que la boîte se compose de deux demi-coques en matière plastique (14, 15), dans les faces latérales planes desquelles sont intégrées les électrodes isolées (4, 5), et qui sont disposées entre deux plaques de serrage en métal (18, 20) les serrant l'une contre l'autre.

10. Dispositif selon l'une des revendications 5 à 9, caractérisé en ce que l'électrode de raccordement établissant la liaison électro-conductrice avec le liquide, est constituée par un tube métallique conduisant à l'ouverture d'alimentation ou à l'ouverture d'évacuation.

Fig. 1

Fig. 2

Fig. 3

Fig. 4

220 V
~

9

9

7

8

+ 10

Fig. 5

2

26

5

1

3

Fig. 6

6

28

1

5

3

7

8

10

27

4

26

2